# DEMANDE DE BREVET EUROPEEN

(11) **EP 4 672 705 A1**
(43) Date de publication de la demande: **31.12.2025**
(21) Numéro de dépôt: 25185139.0
(22) Date de dépôt: 25.06.2025
(51) Int. Cl.: H04L 45/16

(54) **PROCEDE D'ABONNEMENT A DES MULTIDIFFUSIONS DANS UN RESEAU DE COMMUNICATION MAILLE DE TYPE RESEAU LOCAL**

(30) Priorité: 26.06.2024 FR 2406878
(71) Demandeur: SAGEMCOM BROADBAND SAS, 92270 Bois-Colombes (FR)
(72) Inventeur: ALARCON, Laurent, 92270 BOIS-COLOMBES (FR); LE ROUX, Sylvain, 92270 BOIS-COLOMBES (FR); ROCQUELAY, Antonie, 92270 BOIS-COLOMBES (FR)
(74) Mandataire: Cabinet Le Guen Maillet

(57) **Abrégé**

Dans un réseau de communication maillé, des dispositifs ponts utilisent en parallèle : une première configuration de premier réseau logique, pour acheminer des paquets de données en mode point-à-point, selon un routage dynamique entre les dispositifs ponts ; et une deuxième configuration de deuxième réseau logique, pour acheminer des paquets de données en mode diffusion, selon un arbre couvrant éliminant les boucles potentielles. Suite à une demande d'abonnement reçue (410) en provenance d'un dispositif station, chaque dispositif pont est instruit (414) de lancer une recherche de source du flux de données multidiffusion. Lorsque le flux de données multidiffusion est reçu via un port d'entrée d'un dit dispositif pont, ledit dispositif pont est configuré pour commuter le flux de données multidiffusion depuis le port d'entrée vers un port de sortie en direction du dispositif station selon la première configuration.

## Description

### DOMAINE TECHNIQUE

La présente invention concerne des multidiffusions (« multicast » en anglais) de paquets de données dans un réseau de communication maillé de type réseau local LAN (« Local Area Network » en anglais) dans lequel des dispositifs ponts sont interconnectés.

### ETAT DE LA TECHNIQUE ANTERIEURE

Plusieurs solutions existent pour réaliser un réseau de communication maillé de type réseau local, par exemple pour interconnecter des extendeurs de réseau sans-fil (e.g., WiFi) à une passerelle domestique, et notamment des technologies de dispositifs ponts (« bridge device » en anglais).

Cependant, dans le cadre de ces solutions, un arbre couvrant (« spanning tree » en anglais) est défini pour les transmissions de type « diffusion » (broadcast » en anglais) et de type « multidiffusion » (« multicast » en anglais) de manière à relier l'intégralité des dispositifs ponts en éliminant toute boucle dans le réseau de communication maillé. Les boucles du réseau de communication maillé introduisent alors des redondances qui sont utilisées comme chemin de secours si un chemin principal, de l'arbre couvrant, venait à céder. L'arbre couvrant est alors redéfini afin d'utiliser de tels chemins de secours plutôt que des chemins principaux défaillants qui étaient utilisés précédemment. Néanmoins, à un instant donné, seuls les chemins principaux sont utilisés pour l'ensemble des communications dans le réseau de communication maillé, empêchant alors d'effectuer un routage spécifique des paquets de données. Une telle topologie ne permet en effet d'optimiser que les communications de, et vers, la racine dudit arbre couvrant.

Pour les transmissions de type « multidiffusion », il existe deux modes :
- un mode dense (« dense-mode » en anglais), dans lequel chaque dispositif pont construit un arbre couvrant dont il est lui-même la racine. Il peut alors inonder (« flooding » en anglais) cet arbre couvrant avec un flux de données multidiffusion et élaguer (« pruning » en anglais) ensuite les branches où se trouvent des dispositifs ponts non-intéressés par le flux de données multidiffusion en question.
- un mode épars (« sparse-mode » en anglais) , dans lequel une source de flux de données multidiffusion s'enregistre auprès d'un point central, parfois appelé Point de Rendez-Vous (ou RVP, « Rendez-Vous Point » en anglais), qui est la racine de l'arbre couvrant et à partir duquel le flux de données multidiffusion, fourni par la source, inonde l'arbre couvrant.

Il en ressort que, dans le cas des réseaux de communication maillés, les transmissions de type multidiffusion peuvent être améliorées.

### EXPOSE DE L'INVENTION

Il est souhaitable de pallier les inconvénients précités de l'état de la technique. Il est notamment souhaitable de fournir une solution qui permette d'améliorer le routage de paquets de données dans des transmissions de type multidiffusion (« multicast » en anglais) au sein de tels réseaux de communication maillés, afin de mieux bénéficier de la redondance offerte par leur maillage plutôt que de s'appuyer sur un arbre couvrant pour l'acheminement de ces paquets de données.

Il est proposé ici un procédé de transmission de paquets de données dans un réseau de communication maillé de type réseau local qui interconnecte des dispositifs ponts, chaque dispositif pont utilisant en parallèle : une première configuration de premier réseau logique, qui est utilisée pour acheminer des paquets de données en mode point-à-point, et qui est définie par un routage dynamique entre les dispositifs ponts ; et une deuxième configuration de deuxième réseau logique, qui est utilisée pour acheminer des paquets de données en mode diffusion, et qui est définie selon un arbre couvrant par blocage d'un ou plusieurs ports des dispositifs ponts pour éliminer une ou plusieurs boucles du réseau de communication maillé. Le procédé comporte : suite à une première demande d'abonnement reçue en provenance d'un dispositif station connecté au réseau local, instruire chaque dispositif pont de lancer une recherche de source du flux de données multidiffusion de sorte que chaque dispositif pont transmette sur chacun de ses ports une deuxième demande d'abonnement au flux de données multidiffusion et ne tienne pas compte de toute telle deuxième demande d'abonnement au flux de données multidiffusion provenant de tout autre dit dispositif pont Et lorsque le flux de données multidiffusion est reçu via un port d'entrée d'un dit dispositif pont, configurer ledit dispositif pont pour commuter le flux de données multidiffusion depuis le port d'entrée vers un port de sortie en direction du dispositif station selon la première configuration de premier réseau logique.

Ainsi, le routage de paquets de données dans des transmissions de type multidiffusion s'appuie sur la première configuration de premier réseau logique, et non sur la deuxième configuration de deuxième réseau logique, ce qui permet d'optimiser l'acheminement des transmissions de type multidiffusion dans le réseau de communication maillé de type réseau local (moindre coût d'acheminement par rapport à une solution où l'arbre couvrant utilisé pour les diffusions est aussi suivi pour les multidiffusions).

Dans un mode de réalisation particulier, la première demande d'abonnement est reçue en provenance du dispositif station par un dit dispositif pont qui relaie la première demande d'abonnement à un dispositif pont centralisateur qui envoie alors à chaque dispositif pont une instruction de lancer la recherche de source du flux de données multidiffusion.

Dans un mode de réalisation particulier la demande d'abonnement reçue en provenance du dispositif station est reçue par un dit dispositif pont qui envoie alors à chaque dispositif pont une instruction de lancer la recherche de source du flux de données multidiffusion.

Dans un mode de réalisation particulier, chaque deuxième demande d'abonnement est transmise pour le compte du dispositif pont en question bien qu'elle soit faite pour le compte du dispositif station en question.

Dans un mode de réalisation particulier, chaque dispositif pont implémente une table d'orientation de flux de données multidiffusion contenant, pour chaque flux de données multidiffusion passant par ledit dispositif pont : une adresse de niveau 3 du modèle OSI (« Open Systems Interconnection » en anglais) dudit flux de données multidiffusion ; une adresse de niveau 2 du modèle OSI du flux de données multidiffusion, qui a été obtenue en appliquant une règle de conversion à partir de ladite adresse de niveau 3 du modèle OSI dudit flux de données multidiffusion ; une identification du port d'entrée dudit dispositif pont pour ledit flux de données multidiffusion ; et une identification de chaque port de sortie dudit dispositif pont pour ledit flux de données multidiffusion. En outre, chaque dispositif pont retranscrit sa table d'orientation de flux de données multidiffusion dans une table de commutation des flux de données multidiffusion au niveau 2 du modèle OSI.

Il est également proposé ici un produit programme d'ordinateur comportant des instructions causant une implémentation du procédé ci-dessus selon l'un quelconque des modes de réalisation exposés, lorsque les instructions sont exécutées par un processeur. Il est également proposé ici un support de stockage d'informations comportant des instructions causant une implémentation du procédé ci-dessus selon l'un quelconque des modes de réalisation exposés, lorsque les instructions sont lues depuis le support de stockage d'informations et exécutées par un processeur.

Il est également proposé un dispositif pont destiné à être utilisé dans un réseau de communication maillé de type réseau local, le dispositif pont utilisant en parallèle : une première configuration de premier réseau logique, qui est utilisée pour acheminer des paquets de données en mode point-à-point, et qui est définie par un routage dynamique entre dispositifs ponts du réseau de communication maillé ; et une deuxième configuration de deuxième réseau logique, qui est utilisée pour acheminer des paquets de données en mode diffusion, et qui est définie selon un arbre couvrant par blocage d'un ou plusieurs ports des dispositifs ponts du réseau de communication maillé pour éliminer une ou plusieurs boucles. Le dispositif pont comporte de la circuiterie électronique configurée pour : suite à une première demande d'abonnement reçue en provenance d'un dispositif station connecté au réseau local, instruire chaque dispositif pont du réseau de communication maillé de lancer une recherche de source du flux de données multidiffusion de sorte que chaque dispositif pont du réseau de communication maillé transmette sur chacun de ses ports une deuxième demande d'abonnement au flux de données multidiffusion et ne tienne pas compte de toute telle deuxième demande d'abonnement au flux de données multidiffusion provenant de tout autre dit dispositif pont du réseau de communication maillé ; et lorsque le flux de données multidiffusion est reçu via un port d'entrée dudit dispositif pont, configurer ledit dispositif pont pour commuter le flux de données multidiffusion depuis le port d'entrée vers un port de sortie en direction du dispositif station selon la première configuration de premier réseau logique .

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication maillé ;
[Fig. 2] illustre schématiquement un exemple d'agencement matériel adapté pour implémenter un dispositif du réseau de communication maillé ;
[Fig. 3] illustre schématiquement un organigramme d'un algorithme de traitement d'une demande d'abonnement à un flux de données multidiffusion, reçue en provenance d'un dispositif station par un dispositif pont ;
[Fig. 4] illustre schématiquement un organigramme d'un algorithme de traitement, par le dispositif pont centralisateur, d'une demande d'abonnement à un flux de données multidiffusion, relayée par un dispositif pont ;
[Fig. 5] illustre schématiquement un organigramme d'un algorithme de traitement, par un dispositif pont, d'une instruction de lancer une recherche d'une source d'un flux de données multidiffusion pour le compte d'un dispositif station ;
[Fig. 6] illustre schématiquement un organigramme d'un algorithme de traitement, par un dispositif pont, d'une demande d'abonnement à un flux de données multidiffusion, reçue en provenance d'un autre dispositif pont ;
[Fig. 7] illustre schématiquement un organigramme d'un algorithme de réaction, par un dispositif pont, à une réception de flux de données multidiffusion pour lequel une demande d'abonnement a été précédemment faite pour le compte d'un dispositif station ;
[Fig. 8] illustre schématiquement une table d'orientation des flux de données multidiffusion ;
[Fig. 9A] illustre schématiquement une première partie d'un exemple de mise en place de transmission d'un flux de données multidiffusion dans le réseau de communication maillé ;
[Fig. 9B] illustre schématiquement une deuxième partie de l'exemple de mise en place de transmission du flux de données multidiffusion dans le réseau de communication maillé ;
[Fig. 9C] illustre schématiquement une troisième partie de l'exemple de mise en place de transmission du flux de données multidiffusion dans le réseau de communication maillé ;
[Fig. 9D] illustre schématiquement une quatrième partie de l'exemple de mise en place de transmission du flux de données multidiffusion dans le réseau de communication maillé ;
[Fig. 9E] illustre schématiquement une cinquième partie de l'exemple de mise en place de transmission du flux de données multidiffusion dans le réseau de communication maillé ;
[Fig. 9F] illustre schématiquement une sixième partie de l'exemple de mise en place de transmission du flux de données multidiffusion dans le réseau de communication maillé ;
[Fig. 9G] illustre schématiquement une septième partie de l'exemple de mise en place de transmission du flux de données multidiffusion dans le réseau de communication maillé ;
[Fig. 9H] illustre schématiquement une huitième partie de l'exemple de mise en place de transmission du flux de données multidiffusion dans le réseau de communication maillé ;
[Fig. 10] illustre schématiquement un organigramme d'un algorithme alternatif de traitement d'une demande d'abonnement à un flux de données multidiffusion, reçue en provenance d'un dispositif station par un dispositif pont ;
[Fig. 11] illustre schématiquement un organigramme d'un algorithme de traitement d'une demande de désabonnement à un flux de données multidiffusion, reçue en provenance d'un dispositif station par un dispositif pont ; et
[Fig. 12] illustre schématiquement un exemple de désabonnement à un flux de données multidiffusion dans le réseau de communication maillé.

### EXPOSE DETAILLE DE MODES DE REALISATION

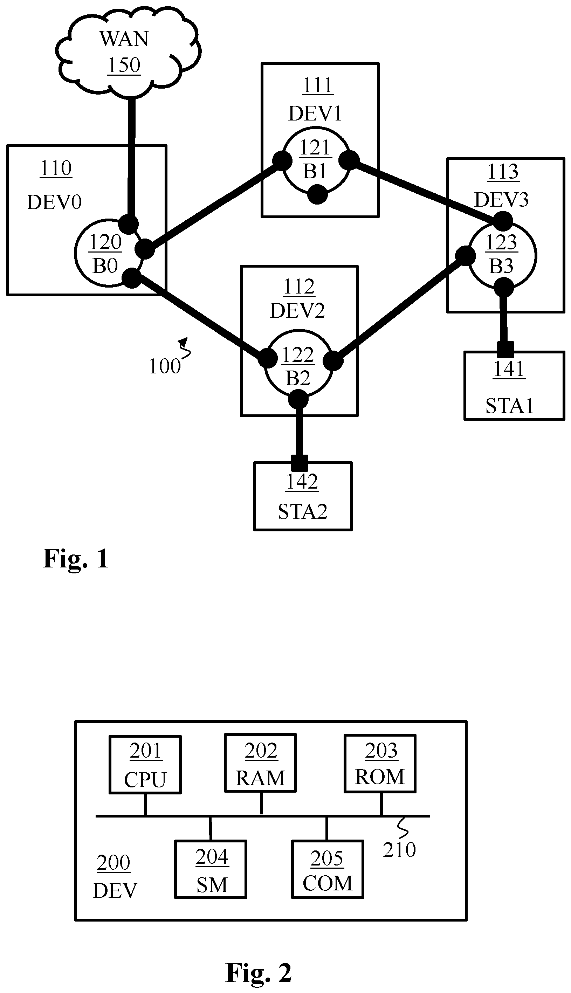

La Fig. 1 illustre ainsi schématiquement un réseau de communication maillé 100 de type réseau local LAN (« Local Area Network » en anglais) qui interconnecte des dispositifs ponts B0 120, B1 121, B2 122, B3 123.

Les dispositifs ponts B0 120, B1 121, B2 122, B3 123 mettent conjointement en place des mécanismes de routage pour acheminer des paquets de données dans le réseau de communication maillé 100. Le réseau de communication maillé 100 est adapté et configuré pour accueillir des dispositifs stations STA1 141, STA2 142 et leur permettre de communiquer au travers du réseau de communication maillé 100. Par exemple, les dispositifs stations STA1 141, STA2 142 peuvent communiquer entre eux et/ou communiquer avec une fonctionnalité d'un dispositif dans lequel est inclus un dit dispositif pont, telle qu'une fonctionnalité de passerelle pour accéder à un réseau étendu WAN (« Wide Area Network » en anglais) 150, *e.g.*, pour accéder à l'Internet.

Les dispositifs stations STA1 141, STA2 142 sont par exemple des ordinateurs, des tablettes électroniques ou des téléphones mobiles multifonctions, ou tout type d'équipement électronique communicants (TV, décodeur audiovisuel...). On parle, de manière équivalente, de dispositif terminal.

Les dispositifs ponts sont typiquement inclus dans des dispositifs offrant des fonctionnalités supplémentaires. Ainsi, sur la Fig. 1, le dispositif pont B0 120 est inclus dans un dispositif DEV0 110, le dispositif pont B1 121 est inclus dans un dispositif DEV1 111, le dispositif pont B2 122 est inclus dans un dispositif DEV2 112 et le dispositif pont B3 123 est inclus dans un dispositif DEV3 113. Ainsi, dans un mode de réalisation, un dispositif pont (le dispositif pont B0 120 sur la Fig. 1) est inclus dans une passerelle domestique, et les autres dispositifs ponts (les dispositifs ponts B1 121, B2 122 et B3 123 sur la Fig. 1) sont respectivement inclus dans des extendeurs de réseau local sans-fil, tels que des extendeurs Wi-Fi qui permettent d'étendre la couverture Wi-Fi d'un réseau local.

Plus précisément, pour acheminer les paquets de données dans le réseau de communication maillé 100, chacun des dispositifs ponts B0 120, B1 121, B2 122 utilise en parallèle :
- une première configuration de premier réseau logique, qui est utilisée pour acheminer des paquets de données en mode point-à-point (« unicast » en anglais), et qui est définie par un routage dynamique (aussi appelé routage adaptatif), qui optimise les coûts de routes entre les dispositifs ponts B0 120, B1 121, B2 122 ; et
- une deuxième configuration de deuxième réseau logique, qui est utilisée pour acheminer des paquets de données en mode diffusion (« broadcast » en anglais), et qui est définie selon un arbre couvrant (« spanning tree » en anglais) par blocage d'un ou plusieurs ports des dispositifs ponts B0 120, B1 121, B2 122 pour éliminer une ou plusieurs boucles du réseau de communication maillé 100.

L'acheminement des paquets de données en mode multidiffusion (aussi appelé « mode point-multipoint, ou « multicast » en anglais) s'appuie sur la première configuration, comme décrit ci-après.

Par souci de simplicité de description, la Fig. 1 présente un réseau de communication maillé comportant uniquement quatre dispositifs ponts. Il est toutefois entendu que ce qui est décrit ici s'applique à des réseaux de communication maillés présentant des maillages bien plus complexes avec une quantité plus élevée de dispositifs ponts.

La **Fig. 2** illustre schématiquement un exemple d'agencement matériel adapté pour implémenter un dispositif DEV 200 du réseau de communication maillé 100, tel que les dispositifs DEV0 110, DEV1 111, DEV2 112 et DEV3 113.

L'agencement matériel présenté comporte, reliés par un bus de communication 210 : un processeur ou CPU (« Central Processing Unit » en anglais) 201 ; une mémoire vive RAM (« Random-Access Memory » en anglais) 202 ; une mémoire non volatile, par exemple de type ROM (« Read Only Memory » en anglais) 203 ou EEPROM (« Electrically-Erasable Programmable ROM » en anglais), ou de type Flash ; une unité de stockage, telle qu'un support de stockage SM 204, par exemple un disque dur HDD (« Hard Disk Drive » en anglais), ou un lecteur de support de stockage, tel qu'un lecteur de cartes SD (« Secure Digital » en anglais) ; et un gestionnaire d'interfaces de communication COM 205.

Le gestionnaire d'interfaces de communication COM 205 permet à l'agencement matériel présenté d'interagir avec d'autres dispositifs du réseau de communication maillé 100 ou qui sont connectés au réseau de communication maillé 100. Les interfaces de communication sont par exemple des interfaces Wi-Fi sur différentes bandes de fréquences (2,4 GHz, 5 GHz, 6 GHz), des interfaces Ethernet... A noter que plusieurs ports de dispositif pont peuvent être virtualisés sur une même interface physique de communication.

Le processeur ou CPU 201 est capable d'exécuter des instructions chargées dans la mémoire vive 202, notamment à partir de la mémoire non volatile 203 ou du support de stockage SM (tel qu'une carte SD) 204. Lorsque l'agencement matériel présenté est mis sous tension, le processeur ou CPU 201 est ainsi capable de lire de la mémoire vive RAM 202 des instructions et de les exécuter. Ces instructions forment un programme d'ordinateur causant notamment l'implémentation, par le processeur ou CPU 201, des étapes, procédés et comportements décrits ici en relation avec le dispositif auquel le dispositif DEV 200 correspond.

Tout ou partie des étapes, procédés et comportements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, les dispositifs du réseau de communication maillé 100, tels que les dispositifs DEV0 110, DEV1 111, DEV2 112 et DEV3 113 (et par conséquent les dispositifs ponts B0 120, B1 121, B2 122 et B3 123), comportent de la circuiterie électronique adaptée et configurée pour implémenter les étapes, procédés et comportements décrits ici.

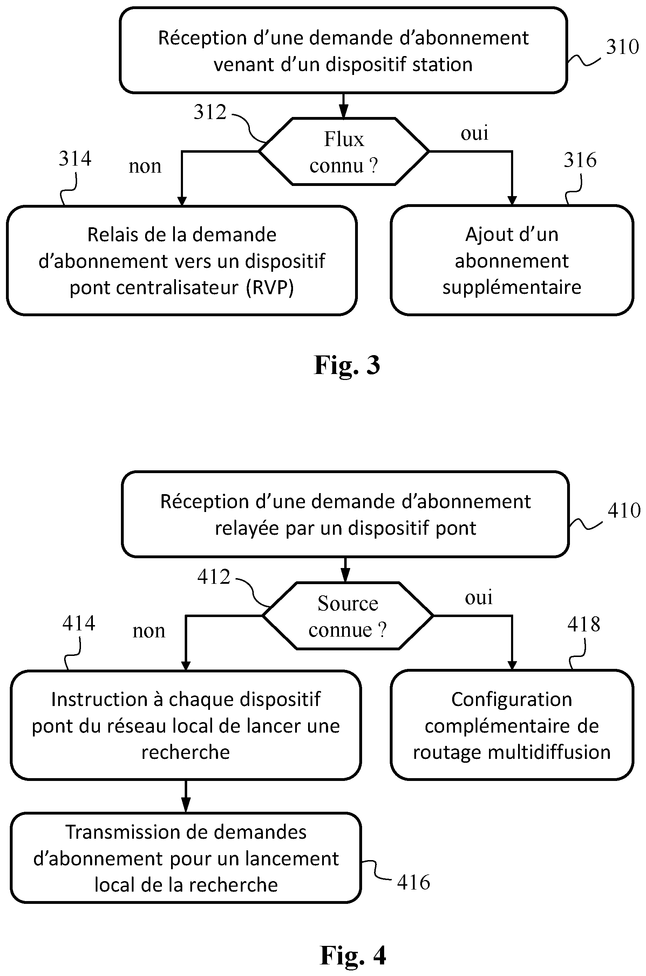

La **Fig. 3** illustre schématiquement un organigramme d'un algorithme de traitement d'une demande d'abonnement à un flux de données multidiffusion, reçue en provenance d'un dispositif station par un dispositif pont.

Dans une étape 310, le dispositif pont en question reçoit la demande d'abonnement au flux de données multidiffusion. Le flux de données multidiffusion est typiquement identifié par une adresse de niveau 3 (couche réseau) du modèle OSI (« Open Systems Interconnection » en anglais), *e.g.*, une adresse IP (« Internet Protocol » en anglais). La demande d'abonnement au flux de données multidiffusion est par exemple un message de type JOIN du protocole IGMP (« Internet Group Management Protocol » en anglais).

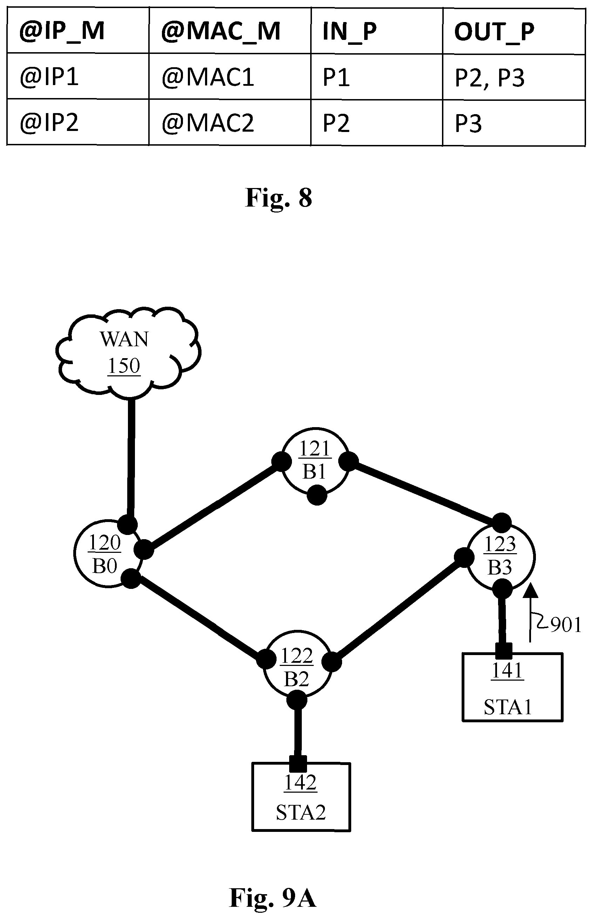

Dans une étape 312, le dispositif pont en question vérifie si le flux de données multidiffusion est connu dudit dispositif pont, c'est-à-dire si le flux de données multidiffusion passe déjà par ledit dispositif pont. Une table d'orientation des flux de données multidiffusion, décrite ci-après en relation avec la Fig. 8, peut être utilisée pour ce faire. Si tel est le cas, une étape 316 est effectuée ; sinon, une étape 314 est effectuée.

Dans l'étape 314, le dispositif pont en question relaie la demande d'abonnement au flux de données multidiffusion à un dispositif pont centralisateur. Par exemple, dans le cadre du protocole PIM (« Protocol Independent Multicast » en anglais) en version « sparse-mode » (« mode épars » en français), le dispositif pont centralisateur est appelé « Point de Rendez-Vous » (ou RVP, « Rendez-Vous Point » en anglais). Le dispositif pont centralisateur est désigné par configuration préalable des dispositifs ponts B0 120, B1 121, B2 122 et B3 123 (par exemple, à l'installation, ou par élection). Le relais de la demande d'abonnement au flux de données multidiffusion s'effectue avec un message dédié, transmis en mode point-à-point. Par exemple, un message PIM JOIN du protocole PIM peut être utilisé pour avertir le dispositif pont centralisateur (« Point de Rendez-Vous ») qu'un dispositif station souhaite s'abonner à un flux de données multidiffusion. Le message de relais fournit au moins une identification du flux de données multidiffusion en question (typiquement son adresse de niveau 3 (couche réseau) du modèle OSI, telle que son adresse IP) et une identification du dispositif station en question (typiquement son adresse de niveau 3 (couche réseau) du modèle OSI, telle que son adresse IP).

Dans l'étape 316, le dispositif pont en question ajoute un abonnement supplémentaire au flux de données multidiffusion en question. Cela peut entraîner la réalisation d'une configuration complémentaire de commutation multidiffusion au sein du dispositif pont en question. En effet, il est possible que le flux de données multidiffusion en question ne soit pas encore propagé vers le port du dispositif pont par lequel la demande d'abonnement en provenance du dispositif station en question a été reçue à l'étape 310. Le dispositif pont en question se configure alors pour propager le flux de données multidiffusion en question aussi vers ce port. Le flux de données multidiffusion en question est alors transmis au dispositif station en question. Le dispositif pont en question peut en informer le dispositif pont centralisateur. Le dispositif pont en question peut en informer les autres dispositifs ponts du réseau local.

En cas de configuration complémentaire de commutation multidiffusion au sein du dispositif pont, comme à l'étape 316, la configuration de commutation multidiffusion est mise à jour avec l'ajout d'un port de sortie pour le flux de données multidiffusion. Ce port de sortie est maintenu dans la configuration complémentaire de commutation multidiffusion, pour le flux de données multidiffusion en question, jusqu'à ce que plus aucun dispositif station accessible via le port en question ne soit abonné au flux de données multidiffusion en question.

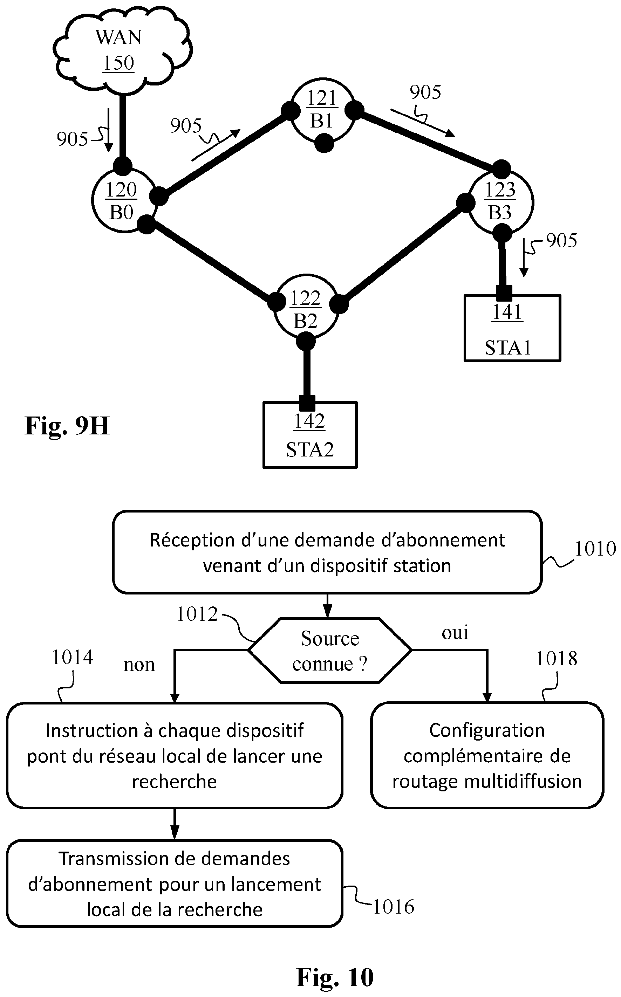

Pour ce faire, le dispositif pont en question garde trace de chaque demande d'abonnement au flux de données multidiffusion que ledit dispositif pont a reçu en provenance d'un dispositif station, ainsi que du port dudit dispositif pont par lequel ladite demande d'abonnement au flux de données multidiffusion a été reçue. Au regard de l'algorithme de la Fig. 3 (ou de celui de la Fig. 10 ci-après), chaque demande d'abonnement au flux de données multidiffusion qui a été ainsi reçue (en provenance d'un dit dispositif station, comme à l'étape 310) provient d'un dispositif station qui est connecté au dispositif pont en question (c'est-à-dire qui accède au réseau de communication maillé 100 par le biais dudit dispositif pont en question). Cette trace est gardée en mémoire par le dispositif pont en question jusqu'à ce que le dispositif pont fasse une demande de désabonnement envers le flux de données multidiffusion en question (par exemple via un message de type LEAVE du protocole IGMP).

La Fig. 3 présente un agencement centralisé. Un agencement distribué, en variante, est présenté ci-après en relation avec la Fig. 10.

La **Fig. 4** illustre schématiquement un organigramme d'un algorithme de traitement, par le dispositif pont centralisateur, d'une demande d'abonnement à un flux de données multidiffusion, relayée par un dispositif pont. L'algorithme de la Fig. 4 est appliqué aussi lorsque le dispositif pont centralisateur reçoit directement une demande d'abonnement à un flux de données multidiffusion en provenance d'un dispositif station qui est connecté sur un de ses ports.

Dans une étape 410, le dispositif pont centralisateur reçoit la demande d'abonnement à un flux de données multidiffusion, qui a été relayée par un dispositif pont comme décrit ci-dessus en relation avec la Fig. 3. Par exemple, la demande d'abonnement à un flux de données multidiffusion est inscrite dans un message PIM JOIN.

Dans une étape 412, le dispositif pont centralisateur vérifie si le flux de données multidiffusion est connu dudit dispositif pont centralisateur, c'est-à-dire si le dispositif pont centralisateur a déjà été sollicité pour le flux de données multidiffusion en question. Si tel est le cas, une étape 418 est effectuée ; sinon, une étape 414 est effectuée.

Dans l'étape 414, le dispositif pont centralisateur envoie une instruction à chaque dispositif pont B0 120 B1 121, B2 122 et B3 123 du réseau local (c'est-à-dire, donc, lui-même y compris) de lancer une recherche de la source du flux de données multidiffusion en question. Par exemple, le protocole PIM peut être enrichi à cet effet avec un message PIM JOINREQUEST destiné à instruire un dit dispositif pont à qui le message PIM JOINREQUEST est adressé de lancer une recherche par émission d'une demande d'abonnement sur chacun de ses ports. Cette instruction est préférentiellement envoyée en mode point-à-point par le dispositif pont centralisateur à chaque autre dispositif pont B0 120 B1 121, B2 122 et B3 123. L'instruction indique que la demande est faite pour le compte du dispositif station en question (typiquement son adresse de niveau 3 (couche réseau) du modèle OSI, telle que son adresse IP) et identifie donc le dispositif station en question, ainsi que le flux de données multidiffusion en question (typiquement son adresse de niveau 3 (couche réseau) du modèle OSI, telle que son adresse IP).

Dans un mode de réalisation particulier comme illustré sur la Fig. 1 où le réseau local est connecté à un réseau étendu WAN par l'intermédiaire d'une passerelle embarquant un routeur (ici le routeur B0 120), la source du flux de données multidiffusion peut se trouver dans le périmètre du réseau local ou alors être accessible via le réseau étendu WAN. La recherche doit alors être lancée autant sur le réseau local que sur le réseau étendu WAN.

Ensuite, dans une étape 416, le dispositif pont centralisateur applique lui-même l'instruction de lancer la recherche de la source du flux de données multidiffusion en question (lancement local de la recherche). Pour ce faire, le dispositif pont centralisateur transmet sur chacun de ses ports une demande d'abonnement au flux de données multidiffusion en question. La demande prend par exemple la forme d'un message de type JOIN du protocole IGMP. La demande d'abonnement est transmise pour le compte du dispositif pont centralisateur bien qu'elle soit faite pour le compte du dispositif station en question. Le dispositif pont centralisateur retient que la demande d'abonnement est réellement transmise pour le compte du dispositif station en question et non pour le sien.

Dans l'étape 418, le dispositif pont centralisateur instruit une configuration complémentaire de routage multidiffusion au sein du dispositif pont en question. En effet, à ce stade, le flux de données multidiffusion en question n'est pas encore propagé vers le port du dispositif pont par lequel la demande d'abonnement en provenance du dispositif station en question a été reçue à l'étape 310 (sinon, l'abonnement aurait été pris en compte dès l'exécution de la Fig. 3).

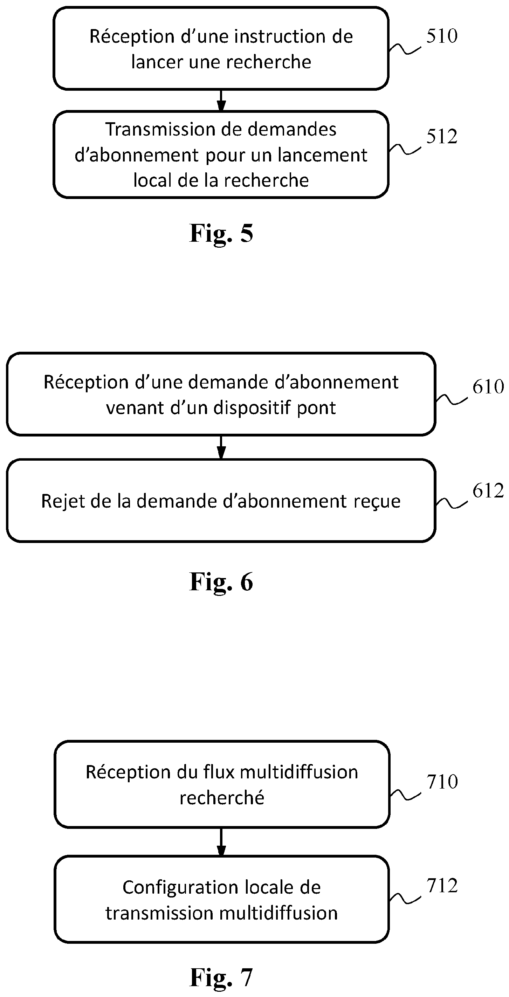

Par exemple, le dispositif pont centralisateur, de par sa connaissance de la topologie du réseau de communication maillé 100 et des coûts de liens grâce au routage adaptatif, est capable de savoir par quel(s) dispositif(s) pont(s) passe déjà le flux de données multidiffusion en question dans le réseau de communication maillé. Par exemple, le dispositif pont centralisateur envoie un message au dispositif pont à partir duquel le flux de données multidiffusion doit disposer d'une nouvelle branche pour atteindre le dispositif station en question. Ce dispositif pont, à partir duquel le flux de données multidiffusion doit disposer d'une nouvelle branche, détecte que le flux de données multidiffusion en question passe déjà par lui, et effectue une mise à jour de sa configuration locale de transmission multidiffusion de sorte à permettre de propager le flux de données multidiffusion en question aussi jusqu'au dispositif station concerné. Comme décrit ci-dessous la description en relation avec la Fig. 7, le dispositif pont en question remplit sa table d'orientation des flux de données multidiffusion, (ajout d'un port de sortie), et la retranscrit ensuite dans sa table de commutation des flux de données multidiffusion. Et ainsi de suite, le dispositif pont centralisateur envoie un tel message à tous les dispositifs ponts sur la branche, selon la première configuration de premier réseau logique, qui sont à configurer pour atteindre le dispositif station en question.

La **Fig. 5** illustre schématiquement un organigramme d'un algorithme de traitement, par un dispositif pont, d'une instruction de lancer une recherche d'une source d'un flux de données multidiffusion pour le compte d'un dispositif station.

Dans une étape 510, le dispositif pont en question reçoit l'instruction de lancer la recherche de la source d'un flux de données multidiffusion. L'instruction indique que la demande est faite pour le compte du dispositif station en question (typiquement son adresse de niveau 3 (couche réseau) du modèle OSI, telle que son adresse IP) et identifie donc le dispositif station en question, ainsi que le flux de données multidiffusion en question (typiquement son adresse de niveau 3 (couche réseau) du modèle OSI, telle que son adresse IP).

Dans une étape 512, le dispositif pont en question transmet sur chacun de ses ports une demande d'abonnement au flux de données multidiffusion en question. La demande prend par exemple la forme d'un message de type JOIN du protocole IGMP. La demande d'abonnement est transmise pour le compte du dispositif pont en question bien qu'elle soit faite pour le compte du dispositif station en question. Le dispositif pont en question retient que la demande d'abonnement est réellement transmise pour le compte du dispositif station en question et non pour le sien. Cela permet de faire en sorte de pouvoir rechercher, lorsque le flux de données multidiffusion recherché va entrer dans le maillage formé par l'interconnexion des dispositifs ponts, la meilleure route (selon la première configuration de premier réseau logique) jusqu'au dispositif station en question.

La **Fig. 6** illustre schématiquement un organigramme d'un algorithme de traitement, par un dispositif pont, d'une demande d'abonnement à un flux de données multidiffusion, reçue en provenance d'un autre dispositif pont.

La demande d'abonnement à un flux de données multidiffusion provient d'une recherche de source du flux de données multidiffusion, telle qu'initiée par ledit autre dispositif pont à l'étape 416 ou 512.

Dans une étape 610, le dispositif pont en question reçoit la demande d'abonnement à un flux de données multidiffusion en provenance dudit autre dispositif pont. Etant donné qu'il a lui-même reçu l'instruction de lancer la recherche de la source du flux de données multidiffusion en question, cette demande d'abonnement au flux de données multidiffusion n'a pas à être prise en compte, ni à être relayée, par le dispositif pont en question.

Ainsi, dans une étape 612, le dispositif pont en question jette (ou rejette) la demande d'abonnement au flux de données multidiffusion qui a été reçue en provenance dudit autre dispositif pont.

Par exemple, le dispositif pont en question peut reconnaître l'origine (dispositif station ou dispositif pont) de la demande d'abonnement au flux de données multidiffusion grâce à une information d'adresse source (de niveau 3 (couche réseau) et/ou de niveau 2 (couche liaison) du modèle OSI, e.g., respectivement adresse IP et/ou adresse MAC).

La **Fig. 7** illustre schématiquement un organigramme d'un algorithme de réaction, par un dispositif pont, à une réception de flux de données multidiffusion pour lequel une demande d'abonnement a été précédemment faite pour le compte d'un dispositif station.

Dans une étape 710, le dispositif pont en question reçoit le flux de données multidiffusion en question. Le dispositif pont en question retrouve une trace indiquant que ce flux de données multidiffusion a fait l'objet d'une demande d'abonnement en vertu d'une instruction de lancement de recherche de sa source (étape 416 ou 512).

Dans une étape 712, le dispositif pont en question effectue une configuration locale de transmission multidiffusion de sorte à permettre de propager le flux de données multidiffusion en question dans le réseau local jusqu'au dispositif station concerné. Pour ce faire, le dispositif pont en question note via quel port (premier port) le flux de données multidiffusion est reçu, et détermine via quel port (deuxième port) le dispositif station en question est accessible selon la première configuration (celle pour les transmissions point-à-point), de manière à optimiser la route jusqu'au dispositif station concerné. Le dispositif pont se configure de sorte à permettre la commutation depuis le premier port vers le deuxième port du flux de données multidiffusion en question.

Dans un mode de réalisation particulier, le dispositif pont remplit une table d'orientation des flux de données multidiffusion, comme décrit ci-après en relation avec la Fig. 8, et la retranscrit ensuite dans une table de commutation des flux de données multidiffusion (au niveau 2 (couche liaison) du modèle OSI). Cela évite d'utiliser la deuxième configuration de deuxième réseau logique (celle pour les diffusions de données) dans le cadre des transmissions multidiffusion et optimise donc l'utilisation du réseau.

En variante à l'algorithme de la Fig. 7, le dispositif pont en question effectue la configuration locale de transmission multidiffusion (de sorte à permettre de propager le flux de données multidiffusion en question dans le réseau local jusqu'au dispositif station concerné) sur réception d'un message de confirmation de la prise en compte d'une dite demande d'abonnement au flux de données multidiffusion qui a été transmise par ledit dispositif pont lors de la recherche de la source dudit flux de données multidiffusion.

Dans une autre variante, le message de confirmation de la prise en compte d'une dite demande d'abonnement au flux de données multidiffusion qui a été transmise par ledit dispositif pont lors de la recherche de la source dudit flux de données multidiffusion est relayé au dispositif pont centralisateur. Et c'est sur instruction du dispositif pont centralisateur que la configuration locale de transmission multidiffusion (de sorte à permettre de propager le flux de données multidiffusion en question dans le réseau local jusqu'au dispositif station concerné) est appliquée.

La **Fig. 8** illustre schématiquement une table d'orientation des flux de données multidiffusion.

Chaque dispositif pont B0 120, B1 121, B2 122 et B3 123 du réseau local implémente sa propre table d'orientation des flux de données multidiffusion.

Cette table d'orientation des flux de données multidiffusion est construite et mise à jour par le dispositif pont B0 120, B1 121, B2 122 et B3 123 concerné pour faciliter la mise en place de commutations de flux de données multidiffusion au sein du réseau local en fonction des abonnements requis.

La table d'orientation des flux de données multidiffusion contient une correspondance entre :
- une adresse de niveau 3 (couche réseau) du modèle OSI du flux de données multidiffusion, notée @IP_M, typiquement son adresse IP ;
- une adresse de niveau 2 (couche liaison) du modèle OSI du flux de données multidiffusion, notée @MAC_M, typiquement son adresse MAC ;
- une identification, notée IN_P, du port d'entrée du dispositif pont considéré, par lequel le flux de données multidiffusion entre ; et
- une identification, notée OUT _P, du ou des ports de sortie du dispositif pont considéré, par lequel ou lesquels le flux de données multidiffusion sort.

De manière illustrative, la Fig. 8 montre ainsi, pour un dispositif pont donné, un contenu de table d'orientation des flux de données multidiffusion incluant :
- un premier flux de données multidiffusion, ayant une adresse de niveau 3 (couche réseau) du modèle OSI notée @IP1 et une adresse de niveau 2 (couche liaison) du modèle OSI notée @MAC1, et pour lequel le port d'entrée est un port noté P1 et deux ports de sortie notés P2 et P3 sont déclarés ;
- un deuxième flux de données multidiffusion, ayant une adresse de niveau 3 (couche réseau) du modèle OSI notée @IP2 et une adresse de niveau 2 (couche liaison) du modèle OSI notée @MAC2, et pour lequel le port d'entrée est le port P2 et l'unique port de sortie est le port P3.

Dans la situation décrite par la table d'orientation des flux de données multidiffusion de la Fig. 8, le premier flux de données multidiffusion entre donc par le port P1 du dispositif pont en question et est commuté vers les ports P2 et P3, alors que le deuxième flux de données multidiffusion entre par le port P2 du dispositif pont en question et est commuté uniquement vers le port P3.

A noter que la correspondance entre une adresse de niveau 3 (couche réseau) du modèle OSI d'un flux de données multidiffusion et une adresse de niveau 2 (couche liaison) du modèle OSI du flux de données multidiffusion peut être classiquement obtenue par application d'une règle de conversion. Par exemple, dans le cas d'une adresse IPv6 de flux de données multidiffusion, l'adresse MAC correspondante est obtenue en préfixant les 4 derniers octets de ladite adresse IPv6 par la valeur 0x3333, comme défini dans le document normatif RFC 4291 ; et dans le cas d'une adresse IPv4 de flux de données multidiffusion, l'adresse MAC correspondante peut être obtenue en préfixant les 23 derniers bits de ladite adresse IPv4 par la valeur 0x01005E suivie d'un bit à 0.

Dans un mode de réalisation particulier, à chaque mise à jour de la table d'orientation des flux de données multidiffusion par un dispositif pont, le dispositif pont en question en informe le dispositif pont centralisateur. Ainsi, le dispositif pont centralisateur est au courant des acheminements de flux de données multidiffusion dans le réseau de communication maillé 100. Une variante possible est que chaque dispositif pont est informé des mises à jour des tables d'orientation des flux de données multidiffusion, et ainsi chaque dispositif pont centralisateur est au courant des acheminements de flux de données multidiffusion dans le réseau de communication maillé 100.

Les **Figs. 9A** **à** **9H** illustrent un exemple d'application des algorithmes décrits ci-dessus en relation avec les Figs. 3 à 7. Les Figs. 9A à 9H illustrent ainsi schématiquement un exemple de mise en place de transmission du flux de données multidiffusion dans le réseau de communication maillé 100.

Il est considéré dans le cadre de l'exemple illustré aux Figs. 9A à 9H que le dispositif pont centralisateur est le dispositif pont B0 120.

Sur la Fig. 9A, le dispositif station STA1 141 transmet une demande 901 d'abonnement à un flux de données multidiffusion. Par exemple, la demande 901 est un message IGMP JOIN. Cette demande 901 est reçue par le dispositif pont B3 123, par exemple, via son port « 2 ». Considérons à titre illustratif que la source du flux de données multidiffusion en question est accessible via le réseau étendu WAN 150 et qu'aucun dispositif station n'est encore abonné à ce flux de données multidiffusion.

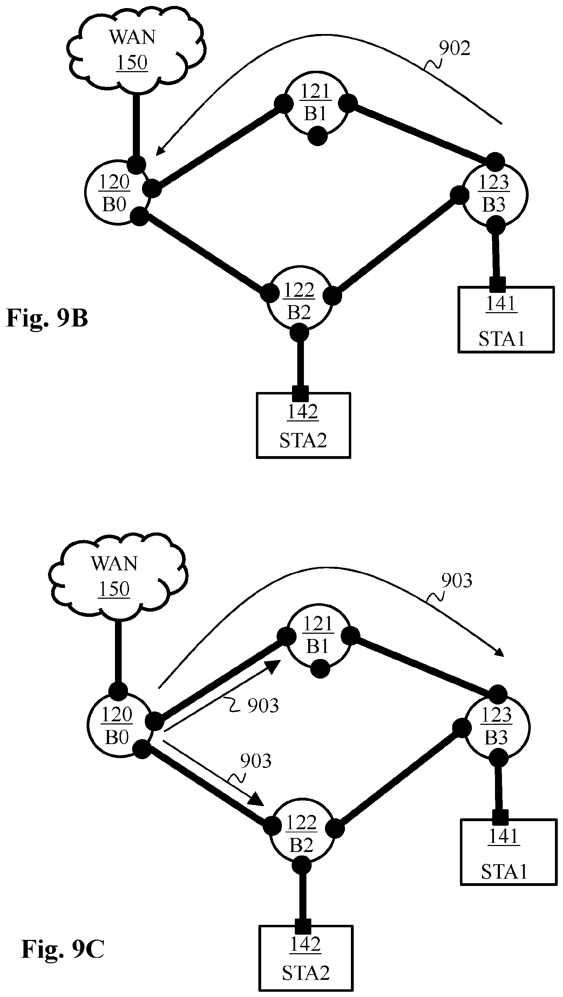

Sur la Fig. 9B, par exécution de l'algorithme de la Fig. 3, le dispositif pont B3 123 transmet, au dispositif pont B0 120 en tant que dispositif pont centralisateur, un message 902 de relais de la demande d'abonnement au flux de données multidiffusion. Par exemple, le message 902 est un message PIM JOIN.

Sur la Fig. 9C, par exécution de l'algorithme de la Fig. 4, le dispositif pont B0 120 en tant que dispositif pont centralisateur transmet à chaque autre dispositif pont B1 121, B2 122 et B3 123 un message d'instruction 903 pour instruire de lancer une recherche de la source du flux de données multidiffusion en question. Par exemple, le message d'instruction est un message PIM JOINREQUEST comme susmentionné.

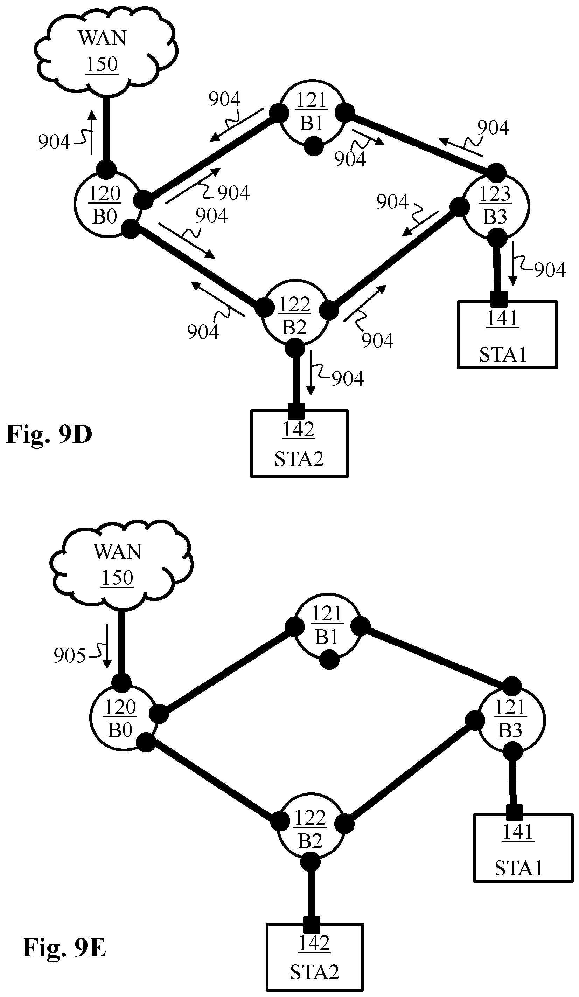

Sur la Fig. 9D, par exécution de l'algorithme de la Fig. 5 (étape 416 pour le dispositif pont B0 120), chaque dispositif pont transmet, en son nom, mais pour le compte du dispositif station concerné, une demande 904 d'abonnement à un flux de données multidiffusion sur chacun de ses ports. Par exemple, la demande 904 est un message IGMP JOIN. Une telle demande 904 est notamment transmise sur le réseau étendu WAN 150.

Sur la Fig. 9E, le flux de données multidiffusion 905 est reçu en provenance du réseau étendu WAN 150 par le dispositif pont B0 120, par exemple via son port « 0 ».

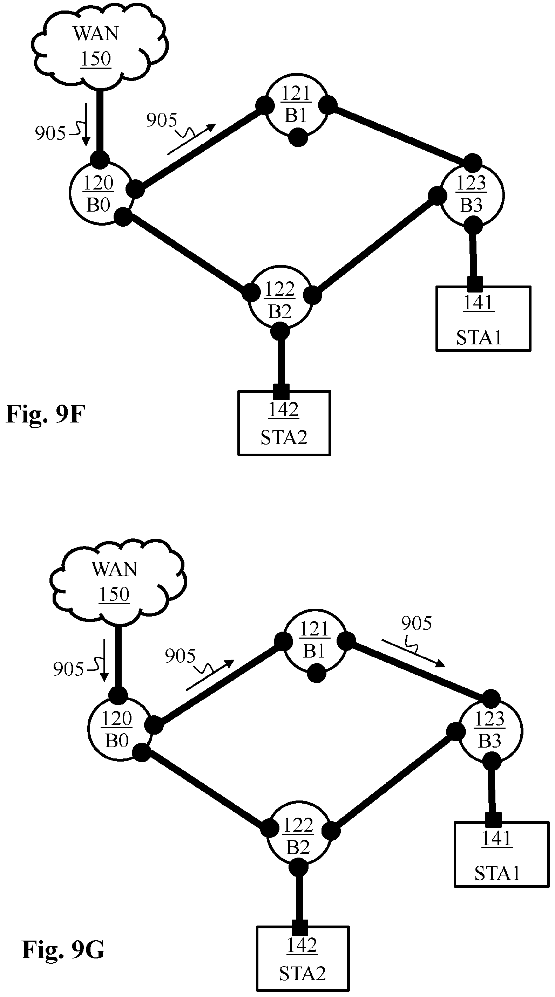

Considérant que la route vers le dispositif station STA1 141 sort du dispositif pont B0 120 via son port « 1 » à destination du dispositif pont B1 121, le dispositif pont B0 120 établit une règle de commutation (niveau 2 (couche liaison) du modèle OSI) pour que le flux de données multidiffusion 905 arrivant par son port « 0 » soit propagé par son port « 1 », comme illustré sur la Fig. 9F. Le flux de données multidiffusion 905 est alors reçu en provenance du dispositif pont B0 120 par le dispositif pont B1 121, par exemple via son port « 0 ».

Considérant que la route vers le dispositif station STA1 141 sort du dispositif pont B1 121 via son port « 2 » à destination du dispositif pont B3 123, le dispositif pont B1 121 établit une règle de commutation (niveau 2 (couche liaison) du modèle OSI) pour que le flux de données multidiffusion 905 arrivant par son port « 0 » soit propagé par son port « 2 », comme illustré sur la Fig. 9G. Le flux de données multidiffusion 905 est alors reçu en provenance du dispositif pont B1 121 par le dispositif pont B3 123, par exemple via son port « 0 ».

Le dispositif pont B3 123 établit alors une règle de commutation (niveau 2 (couche liaison) du modèle OSI) pour que le flux de données multidiffusion 905 arrivant par son port « 0 » soit propagé par son port « 2 », comme illustré sur la Fig. 9H. Le dispositif station STA1 141 reçoit alors le flux de données multidiffusion 905, et l'acheminement du flux de données multidiffusion 905 est optimisé dans le réseau de communication maillé 100.

La **Fig. 10** illustre schématiquement un organigramme d'un algorithme alternatif de traitement d'une demande d'abonnement à un flux de données multidiffusion, reçue en provenance d'un dispositif station par un dispositif pont.

Dans une étape 1010, le dispositif pont en question reçoit la demande d'abonnement au flux de données multidiffusion, comme à l'étape 310.

Dans une étape 1012, le dispositif pont en question vérifie si le flux de données multidiffusion est connu dudit dispositif pont, c'est-à-dire si le flux de données multidiffusion passe déjà par ledit dispositif pont. La table d'orientation des flux de données multidiffusion, décrite ci-dessus en relation avec la Fig. 8, peut être utilisée pour ce faire. Si tel est le cas, une étape 1018 est effectuée ; sinon, une étape 1014 est effectuée.

Dans l'étape 1014, le dispositif pont en question envoie une instruction à chaque dispositif pont B0 120 B1 121, B2 122 et B3 123 du réseau local (c'est-à-dire, donc, lui-même y compris) de lancer une recherche de la source du flux de données multidiffusion en question. Par exemple, le message PIM JOINREQUEST susmentionné est utilisé. Cette instruction est préférentiellement envoyée en mode point-à-point. L'instruction indique que la demande est faite pour le compte du dispositif station en question (typiquement son adresse de niveau 3 (couche réseau) du modèle OSI, telle que son adresse IP) et identifie donc le dispositif station en question, ainsi que le flux de données multidiffusion en question (typiquement son adresse de niveau 3 (couche réseau) du modèle OSI, telle que son adresse IP). Cela entraîne le déclenchement de l'algorithme de la Fig. 5 par les dispositifs ponts B0 120 B1 121, B2 122 et B3 123.

Dans une étape 1016, le dispositif pont en question applique lui-même l'instruction de lancer la recherche de la source du flux de données multidiffusion en question (lancement local de la recherche). Pour ce faire, le dispositif pont en question transmet sur chacun de ses ports une demande d'abonnement au flux de données multidiffusion en question. La demande prend par exemple la forme d'un message de type JOIN du protocole IGMP, comme déjà décrit. La demande d'abonnement est transmise pour le compte du dispositif pont en question bien qu'elle soit faite pour le compte du dispositif station en question. Le dispositif pont en question retient que la demande d'abonnement est réellement transmise pour le compte du dispositif station en question et non pour le sien.

Dans l'étape 1018, le dispositif pont en question ajoute un abonnement supplémentaire au flux de données multidiffusion en question. Cela peut entraîner la réalisation d'une configuration complémentaire de commutation multidiffusion au sein du dispositif pont en question. En effet, il est possible que le flux de données multidiffusion en question ne soit pas encore propagé vers le port du dispositif pont par lequel la demande d'abonnement en provenance du dispositif station en question a été reçue à l'étape 1010. Le dispositif pont en question se configure alors pour propager le flux de données multidiffusion en question aussi vers ce port. Le flux de données multidiffusion en question est alors transmis au dispositif station en question.

En cas de configuration complémentaire de commutation multidiffusion au sein du dispositif pont, comme à l'étape 316, la configuration de commutation multidiffusion est mise à jour avec l'ajout d'un port de sortie pour le flux de données multidiffusion. Ce port de sortie est maintenu dans la configuration complémentaire de commutation multidiffusion, pour le flux de données multidiffusion en question, jusqu'à ce que plus aucun dispositif station accessible via le port en question ne soit abonné au flux de données multidiffusion en question.

Par exemple, le dispositif pont en question, de par sa connaissance de la topologie du réseau de communication maillé 100 et des coûts de liens grâce au routage adaptatif, est capable de savoir par quel(s) dispositif(s) pont(s) passe déjà le flux de données multidiffusion en question dans le réseau de communication maillé. Par exemple, le dispositif pont en question envoie un message au dispositif pont à partir duquel le flux de données multidiffusion doit disposer d'une nouvelle branche pour atteindre le dispositif station en question. Ce dispositif pont, à partir duquel le flux de données multidiffusion doit disposer d'une nouvelle branche, détecte que le flux de données multidiffusion en question passe déjà par lui, et effectue une mise à jour de sa configuration locale de transmission multidiffusion de sorte à permettre de propager le flux de données multidiffusion en question aussi jusqu'au dispositif station concerné. Comme décrit ci-dessous la description en relation avec la Fig. 7, le dispositif pont en question remplit sa table d'orientation des flux de données multidiffusion, (ajout d'un port de sortie), et la retranscrit ensuite dans sa table de commutation des flux de données multidiffusion. Et ainsi de suite, le dispositif pont en question envoie un tel message à tous les autres dispositifs ponts sur la branche, selon la première configuration de premier réseau logique, qui sont à configurer pour atteindre le dispositif station en question.

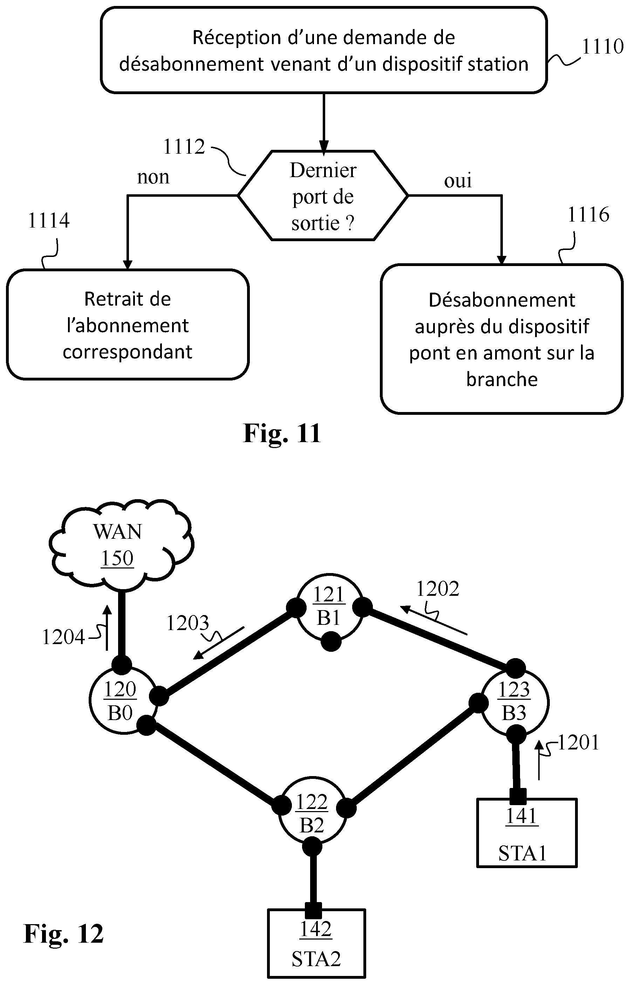

La **Fig. 11** illustre schématiquement un organigramme d'un algorithme de traitement d'une demande de désabonnement à un flux de données multidiffusion, reçue en provenance d'un dispositif station par un dispositif pont.

Dans une étape 1110, le dispositif pont en question reçoit la demande de désabonnement au flux de données multidiffusion, en provenance d'un dispositif station. La demande de désabonnement marque la fin de l'abonnement qui avait été demandé par le dispositif station à l'étape 310 ou 1010.

Le dispositif pont en question prend en compte, dans une étape 1114, le désabonnement du dispositif station en question envers le flux de données multidiffusion concerné,
Le dispositif pont examine si une reconfiguration de commutation multidiffusion au sein du dispositif pont en question est nécessaire. En effet, il est possible que le flux de données multidiffusion en question n'ait plus à être propagé vers le port du dispositif pont par lequel la demande de désabonnement en provenance du dispositif station en question a été reçue à l'étape 1110. Par exemple, en considérant l'exemple de la Fig. 8, le désabonnement du dispositif station rend inutile la propagation du flux de données multidiffusion identifié par l'adresse @IP1 vers le port P3. Auquel cas, une reconfiguration de commutation multidiffusion (éventuellement par l'intermédiaire d'une mise à jour correspondante de la table d'orientation de flux de données multidiffusion) est effectuée pour retirer la propagation vers le port P3.

Le dispositif pont examine aussi, dans une étape 1112, si une reconfiguration de commutation multidiffusion au sein du dispositif pont entraîne que le flux de données multidiffusion en question n'ait plus à être propagé vers aucun port au sein du dispositif pont en question. Par exemple, en considérant l'exemple de la Fig. 8, le désabonnement du dispositif station rend inutile la propagation du flux de données multidiffusion identifié par l'adresse @IP2 vers le port P3. Auquel cas, une reconfiguration de commutation multidiffusion (éventuellement par l'intermédiaire d'une suppression de la ligne correspondante dans la table d'orientation de flux de données multidiffusion) est effectuée pour retirer la propagation du flux de données multidiffusion au sein du dispositif pont en question ; mais de plus, le désabonnement doit remonter le long de la branche concernée dans le réseau de communication maillé. Ainsi, dans une étape 1116, le dispositif pont transmet au dispositif pont en amont sur la branche, c'est-à-dire le dispositif pont qui lui est connecté via le port d'entrée du flux de données multidiffusion concerné, une demande de désabonnement pour le flux de données multidiffusion en question.

Dans un mode de réalisation particulier, le dispositif pont en question informe le dispositif pont concentrateur de toute reconfiguration de commutation multidiffusion ainsi opérée, afin que le dispositif pont centralisateur puisse savoir à tout instant quel flux de données multidiffusion est propagé dans le réseau de communication maillé 100 par quelles routes/branches.

La **Fig. 12** illustre schématiquement un exemple de désabonnement à un flux de données multidiffusion dans le réseau de communication maillé.

Le dispositif station STA1 141 transmet une demande 1201 de désabonnement à un flux de données multidiffusion. Par exemple, la demande 1201 est un message IGMP LEAVE qui correspond au même flux de données multidiffusion que le message IGMP JOIN de la Fig. 9A. Cette demande 1201 est reçue par le dispositif pont B3 123, par exemple, via son port « 2 ».

Le dispositif pont B3 123 se rend compte que plus aucun dispositif station n'est alors abonné au flux de données multidiffusion par son intermédiaire, et stoppe la propagation du flux de données multidiffusion. Le dispositif pont B3 123 en informe le dispositif pont B1 121 par une demande 1202 de désabonnement envers le flux de données multidiffusion. Par exemple, la demande 1202 est un message IGMP LEAVE.

Suite à la réception de la demande 1202, le dispositif pont B1 121 se rend compte qu'il n'est plus nécessaire de propager le flux de données multidiffusion par son intermédiaire, et stoppe la propagation du flux de données multidiffusion. Le dispositif pont B1 121 en informe le dispositif pont B0 120 par une demande 1203 de désabonnement envers le flux de données multidiffusion. Par exemple, la demande 1202 est un message IGMP LEAVE.

Suite à la réception de la demande 1203, le dispositif pont B0 120 se rend compte qu'il n'est plus nécessaire de propager le flux de données multidiffusion par son intermédiaire, et stoppe la propagation du flux de données multidiffusion. Le dispositif pont B0 120 transmet une demande 1204 de désabonnement envers le flux de données multidiffusion en direction de la source du flux de données multidiffusion. Par exemple, la demande 1203 est un message IGMP LEAVE qui est cohérent avec le message IGMP JOIN 904 transmis en direction du réseau étendu WAN 150 sur la Fig. 9D.

Si à la réception de la demande 1203, le dispositif pont B0 120 s'était rendu compte que le flux de données multidiffusion était aussi propagé par son port « 2 » (par exemple, pour permettre au dispositif station STA2 142 de recevoir le flux de données multidiffusion en question), alors le dispositif pont B0 120 aurait stoppé la propagation du flux de données multidiffusion en question vers son port « 1 » mais aurait maintenu la propagation du flux de données multidiffusion en question vers son port « 2 ».

## Revendications

1. Un procédé de transmission de paquets de données dans un réseau de communication maillé (100) de type réseau local qui interconnecte des dispositifs ponts (120, 121, 122, 123), chaque dispositif pont (120, 121, 122, 123) utilisant en parallèle :
- une première configuration de premier réseau logique, qui est utilisée pour acheminer des paquets de données en mode point-à-point, et qui est définie par un routage dynamique entre les dispositifs ponts (120, 121, 122, 123) ; et
- une deuxième configuration de deuxième réseau logique, qui est utilisée pour acheminer des paquets de données en mode diffusion, et qui est définie selon un arbre couvrant par blocage d'un ou plusieurs ports des dispositifs ponts (120, 121, 122, 123) pour éliminer une ou plusieurs boucles du réseau de communication maillé (100),
le procédé comportant :
- suite à une première demande d'abonnement reçue en provenance d'un dispositif station (141, 142) connecté au réseau local, instruire (414, 1014) chaque dispositif pont (120, 121, 122, 123) de lancer une recherche de source du flux de données multidiffusion de sorte que chaque dispositif pont (120, 121, 122, 123) transmette (416, 512) sur chacun de ses ports une deuxième demande d'abonnement au flux de données multidiffusion et ne tienne pas compte de toute telle deuxième demande d'abonnement au flux de données multidiffusion provenant de tout autre dit dispositif pont (120, 121, 122, 123) ;
- lorsque le flux de données multidiffusion est reçu (710) via un port d'entrée d'un dit dispositif pont (120, 121, 122, 123), configurer (712) ledit dispositif pont pour commuter le flux de données multidiffusion depuis le port d'entrée vers un port de sortie en direction du dispositif station (141, 142) selon la première configuration de premier réseau logique.

2. Le procédé selon la revendication 1, dans lequel la première demande d'abonnement est reçue en provenance du dispositif station (141, 142) par un dit dispositif pont (120, 121, 122, 123) qui relaie la première demande d'abonnement à un dispositif pont centralisateur (120) qui envoie (414) alors à chaque dispositif pont (120, 121, 122, 123) une instruction de lancer la recherche de source du flux de données multidiffusion.

3. Le procédé selon la revendication 1, dans lequel la demande d'abonnement reçue en provenance du dispositif station (141, 142) est reçue par un dit dispositif pont (120, 121, 122, 123) qui envoie (1014) alors à chaque dispositif pont (120, 121, 122, 123) une instruction de lancer la recherche de source du flux de données multidiffusion.

4. Le procédé selon l'une des revendications 1 à 3, dans lequel chaque deuxième demande d'abonnement est transmise (416, 512) pour le compte du dispositif pont (120, 121, 122, 123) en question bien qu'elle soit faite pour le compte du dispositif station (141, 142) en question.

5. Le procédé selon l'une quelconque des revendications 1 à 4, dans lequel chaque dispositif pont (120, 121, 122, 123) implémente une table d'orientation de flux de données multidiffusion contenant, pour chaque flux de données multidiffusion passant par ledit dispositif pont (120, 121, 122, 123) :
- une adresse de niveau 3 du modèle OSI dudit flux de données multidiffusion ;
- une adresse de niveau 2 du modèle OSI du flux de données multidiffusion, qui a été obtenue en appliquant une règle de conversion à partir de ladite adresse de niveau 3 du modèle OSI dudit flux de données multidiffusion ;
- une identification du port d'entrée dudit dispositif pont (120, 121, 122, 123) pour ledit flux de données multidiffusion ; et
- une identification de chaque port de sortie dudit dispositif pont (120, 121, 122, 123) pour ledit flux de données multidiffusion ;
et dans lequel chaque dispositif pont (120, 121, 122, 123) retranscrit sa table d'orientation de flux de données multidiffusion dans une table de commutation des flux de données multidiffusion au niveau 2 du modèle OSI.

6. Un produit programme d'ordinateur comportant des instructions causant une implémentation du procédé selon l'une quelconque des revendications 1 à 5, lorsque les instructions sont exécutées par un processeur.

7. Un support de stockage d'informations comportant des instructions causant une implémentation du procédé selon l'une quelconque des revendications 1 à 5, lorsque les instructions sont lues depuis le support de stockage d'informations et exécutées par un processeur.

8. Un dispositif pont (120, 121, 122, 123) destiné à être utilisé dans un réseau de communication maillé (100) de type réseau local, le dispositif pont (120, 121, 122, 123) utilisant en parallèle :
- une première configuration de premier réseau logique, qui est utilisée pour acheminer des paquets de données en mode point-à-point, et qui est définie par un routage dynamique entre dispositifs ponts (120, 121, 122, 123) du réseau de communication maillé (100) ; et
- une deuxième configuration de deuxième réseau logique, qui est utilisée pour acheminer des paquets de données en mode diffusion, et qui est définie selon un arbre couvrant par blocage d'un ou plusieurs ports des dispositifs ponts (120, 121, 122, 123) du réseau de communication maillé (100) pour éliminer une ou plusieurs boucles,
le dispositif pont (120, 121, 122, 123) comportant de la circuiterie électronique configurée pour :
- suite à une première demande d'abonnement reçue en provenance d'un dispositif station (141, 142) connecté au réseau local, instruire (414, 1014) chaque dispositif pont du réseau de communication maillé (100) de lancer une recherche de source du flux de données multidiffusion de sorte que chaque dispositif pont (120, 121, 122, 123) du réseau de communication maillé (100) transmette (416, 512) sur chacun de ses ports une deuxième demande d'abonnement au flux de données multidiffusion et ne tienne pas compte de toute telle deuxième demande d'abonnement au flux de données multidiffusion provenant de tout autre dit dispositif pont (120, 121, 122, 123) du réseau de communication maillé (100) ;
- lorsque le flux de données multidiffusion est reçu via un port d'entrée dudit dispositif pont (120, 121, 122, 123), configurer ledit dispositif pont (120, 121, 122, 123) pour commuter le flux de données multidiffusion depuis le port d'entrée vers un port de sortie en direction du dispositif station (141, 142) selon la première configuration de premier réseau logique.
